# EUROPEAN PATENT APPLICATION

(11) **EP 2 779 036 A1**
(43) Date of publication of application: **17.09.2014**
(21) Application number: 13290049.9
(22) Date of filing: 12.03.2013
(51) Int. Cl.: G06Q 10/00

(54) **Alternative travel recommendations**

(71) Applicant: Amadeus S.A.S., 06410 Biot (FR)
(72) Inventor: Delost, Matthieu, 06520 Grasse Maganosc (FR); Jiang, Dong-Hua, 06200 Nice (FR); Patoureaux, Marc, 06130 Grasse (FR); Dufresne, Thierry, 06560 Opio (FR)
(74) Representative: Samson & Partner

(57) **Abstract**

Methods, systems, and computer program products for generating travel recommendations and alternative travel recommendations. At least one minimum fare path having an associated value may be determined based on a travel request. At least one alternative fare path having an associated value may be determined based at least in part on the associated value of the at least one minimum fare path. At least one travel recommendation may be generated based on the at least one minimum fare path, and at least one alternative travel recommendation may be generated based on the at least one alternative fare path.

## Description

### Field of the Invention

The invention is generally related to computers and computer software, and in particular to methods, systems, and computer program products for generating alternative travel upsell opportunities for potential travelers.

### Background of the Invention

Computer technology is increasingly used in the travel industry to manage and support travel reservations, as well as data associated therewith. With the emergence of internet and mobile technologies, potential travelers increasingly are relying on computer based travel reservation systems to select a travel option from a plurality of potential travel options. In conventional computer based travel reservation systems, potential travelers may transmit a travel request to a travel server, and the travel server may analyze the travel request to determine one or more potential travel recommendations based on the travel request. A potential traveler may select a particular travel recommendation and conduct a reservation transaction with the travel server to reserve the selected travel recommendation. In some conventional systems, the server may provide travel recommendations with flexible dates and/or flexible geographic locations to reduce cost for the potential traveler and/or to increase the probability of selling a travel recommendation to the potential traveler. For example, with respect to a travel recommendation including one or more flights, the travel recommendation may include flights departing and/or arriving at different airports within a geographic region and/or flights departing and/or arriving at different times than the airport and/or times included in the potential traveler's travel request.

Providing such travel services has become increasingly competitive, which generally makes pricing and content more competitive. To remain competitive, conventional travel system suppliers generally strive to provide the lowest priced travel recommendations matching the travel request in the shortest possible query time. Thus, while computer based travel reservation systems generally provide time and cost savings for potential travelers, such systems generally limit travel recommendations presented to the potential traveler as well as limit a travel service supplier's ability to provide additional travel products and/or alternative travel options to the potential traveler.

Consequently, a significant need exists in the art for improved computer based travel reservation systems, as well as methods and computer program products, for providing travel recommendations.

### Summary of the Invention

Embodiments of the invention generate at least one alternative travel recommendation based on a user's travel request in addition to one or more standard travel recommendations, where the at least one alternative travel recommendation may include a higher price relative to the one or more standard travel recommendations, and where the alternative travel recommendation may include at least one additional stop in a geographic location identified as an interesting or attractive geographic location to visit.

Embodiments of the invention generally comprise a method, system and computer program product for generating standard travel recommendations and alternative travel recommendations. A travel request including a geographical constraint and a time constraint may be received at a travel server. At least one minimum fare path that includes an associated monetary value may be determined based on the received travel query. At least one travel recommendation including an associated price is generated based on the at least one minimum fare path. In addition, at least one alternative fare path is determined by filtering a plurality of candidate fare paths. Filtering the candidate fare paths is based at least in part on the associated value of the at least one minimum fare path. At least one alternative travel recommendation is generated based at least in part on the at least one alternative fare path, where the alternative travel recommendation includes an associated price.

In some embodiments, each alternative travel recommendation includes an additional stop not included in any standard travel recommendations, and in such embodiments, candidate fare paths may be filtered based on whether any routes of the candidate fare paths include an additional stop. In some embodiments, the price associated with each alternative travel recommendation is higher compared to the price associated with any standard travel recommendation. A price generally comprises fare amounts, surcharges and applicable taxes. In some embodiments, at least one alternative travel recommendation may not meet the geographic constraint and/or the time constraint of the travel request.

### Brief Description of the Several Views of the Drawings

The accompanying drawings, which are incorporated in and constitute a part of this specification, illustrate various embodiments of the invention and, together with a general description of the invention given above and the detailed description of the embodiments given below, serve to explain the embodiments of the invention.

FIG. 1 is a block diagram illustrating the components of a travel server, availability server, and client device consistent with some embodiments of the invention.

FIG. 2 is a block diagram illustrating functional components of the travel server and/or the availability server of FIG. 1.

FIG. 3 is a flowchart illustrating a sequence of operations that may be performed by the travel server and/or availability server of FIG. 1 to generate one or more travel recommendations and one or more alternative travel recommendations.

FIG. 4 is a flowchart illustrating a sequence of operations that may be performed by the travel server of FIG. 1 to filter one or more fare paths of a minimum fare path graph to extract one or more alternative fare paths.

FIG. 5 is a diagrammatic view of an example of a minimum fare path graph database that may be stored in the travel server of FIG. 1.

FIG. 6 is a diagrammatic view of an example of minimum fare paths and routes that may be utilized by the travel server of FIG. 1 to generate travel recommendations.

FIG. 7 is a diagrammatic view of an example of the filtering and extraction of the flowcharts of Figs. 4 and 5 that may be performed by the travel server of FIG. 1.

FIG. 8 is a diagrammatic view of travel recommendations and alternative travel recommendations generated by the travel server of FIG. 1 that may be output on the user device of FIG. 1.

### Detailed Description

Embodiments of the invention generate alternative travel recommendations in addition to standard travel recommendations corresponding to the lowest prices for a potential traveler (referred to herein as a user) in response to a submitted travel request by the user. In some embodiments of the invention, such alternative travel recommendations include an additional stop not included in the lowest price travel recommendations. In general, an additional stop refers to a stop in a geographic location where such additional geographic location may be of appeal to the user for one or more reasons. For example, the additional stop location may include attractions similar to attractions of the locations of the user's travel request. As another example, the additional stop may include one or more attractions indicated to be desirable by the user in a user profile associated with the user. In another example, such additional stop may be defined as an interesting geographic location, where a database may store data indicating such interesting geographic locations. Moreover, generating the alternative travel recommendations responsive to the user's travel request may be performed concurrently with generating the standard travel recommendations corresponding to the lowest prices for the requested origin and destination, such that any delay in generating the alternative recommendations may be reduced by performing the same operations concurrently to generate the lowest price travel recommendations and the alternative travel recommendations in combination.

In some embodiments, alternative travel recommendations may be generated, where the alternative travel recommendations may modify a time constraint of the user's travel request in addition to including an additional stop. In some embodiments, an alternative travel recommendation may include a higher price compared to the standard, lowest price travel recommendations, and in these embodiments, such alternative travel recommendation may be considered an alternative upsell travel recommendation due to the higher associated price. An alternative travel recommendation may include an additional stop within the time constraint of the user's travel request, or the alternative recommendation may include an additional stop such that the travel time associated with the alternative recommendation does not correspond to the time constraint of the user's travel request.

Consistent with embodiments of the invention, the alternative travel recommendations may enhance a user's travel recommendation shopping experience by providing alternative travel recommendations that may not have been thought of by the user. In addition, by providing alternative travel recommendations, user loyalty may be increased as compared to conventional travel reservation shopping systems, as users may utilize systems incorporating embodiments of the invention more frequently due in part to the wider array of travel options readily available to the user.

Moreover, from a travel provider and/or travel reservation service provider's perspective, the alternative travel recommendations generated by embodiments of the invention may generate higher revenues for the providers. In addition, systems incorporating embodiments of the invention may attract more customers due in part to the enhanced travel recommendation shopping experience, and such enhanced travel recommendation shopping experience may lead to higher reservation rates (i.e., potential customers reserving travel recommendations).

For example, if a travel request for a user included travel from Nice, France (NCE) to San Francisco, California (SFO) (a geographic constraint) departing July 17 and returning July 24 (a time constraint), the user may generally select from travel recommendations including travel departing from NCE on July 17 and returning to NCE July 24. In this example, however, the user may also be presented with one or more alternative travel recommendations. For example, one alternative travel recommendation may include a one day stop in Paris, France (PAR) before arriving in SFO. In another example, an alternative travel recommendation may include a two day stop in Las Vegas, Nevada (LAS) before returning to NCE. Some alternative travel recommendations may modify the time constraint indicated in the travel request. For example, the alternative travel recommendation including a two day stop in Las Vegas may not return to NCE until July 26. Other alternative travel recommendations may not modify the time constraint of the travel request. For example, the alternative travel recommendation including a one day stop in PAR may return to NCE July 24; however, a traveler using such alternative travel recommendation would arrive in SFO a day later.

In general, travel recommendations may be generated by determining and extracting minimum fare paths from a minimum fare path graph database storing a plurality of candidate fare paths. Consistent with embodiments of the invention, the additional locations utilized to generate alternative travel recommendations may be dynamically determined based at least in part on the travel request and the minimum fare paths associated with generating the travel recommendations. The additional locations and/or minimum fare paths may be utilized to determine and extract other fare paths (i.e., alternative fare paths) in addition to the minimum fare paths including associated values, where such alternative fare paths may be utilized to generate alternative travel recommendations. Filtering the alternative fare paths limits the number of alternative fare paths to extract and analyze. In some embodiments, travel routes stored in the minimum fare path graph database and associated with each alternative fare path are analyzed to identify alternative fare paths including an additional stop.

In one embodiment, a travel server including a processor and memory may analyze a received travel request including a geographical constraint and a time constraint to determine one or more travel recommendations based at least in part on the travel request, where each travel recommendation includes an associated price. The travel server may analyze the received travel request to determine one or more alternative travel recommendations based at least in part on the travel request and/or the one or more travel recommendations. Each alternative travel recommendation may include an additional location, where the additional location may not be included in the one or more one travel recommendations, and/or the additional location may not comply with the geographic constraint of the travel request. In determining the at least one alternative travel recommendation, the travel server may filter a plurality of candidate fare paths used to generate the alternative fare paths based at least in part on minimum fare paths used to generate the one or more travel recommendations, the travel request, a user profile associated with the potential traveler, and/or whether each candidate fare path includes at least one additional location as a stop in an associated route. Furthermore, in some embodiments, the alternative travel recommendation generally corresponds to a higher price as compared to the price of the at least one travel recommendation.

Finally, in some embodiments, the alternative travel recommendations may include a higher price as compared to the travel recommendations. In these embodiments, the alternative travel recommendations may be considered upsell alternative travel recommendations that may encourage a user to purchase higher cost travel and thereby generate additional revenue for the travel reservation service provider and/or one or more travel providers. In these embodiments, the alternative fare paths extracted may include higher associated values, and filtering of the alternative fare paths may discard candidate fare paths having associated values that do not exceed the associated values of the minimum fare paths.

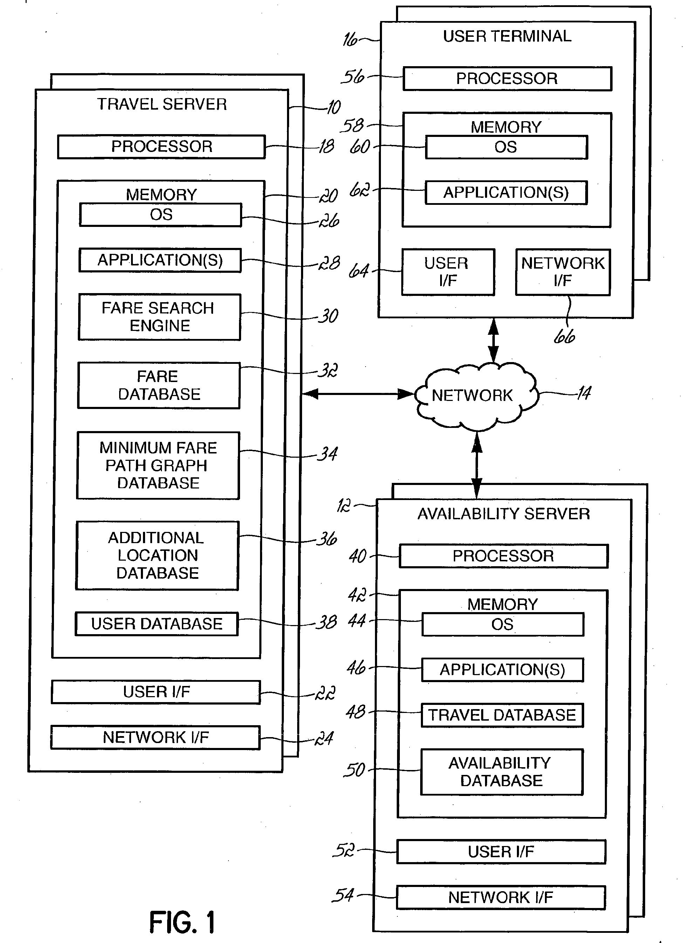

Turning now to the figures and particularly to FIG. 1, this figure provides a block diagram illustrating the components of one or more travel servers 10 and one or more availability servers 12 consistent with embodiments of the invention. As shown, the travel server 10 and availability server 12 may be in communication over a communication network 14. Additionally, one or more client devices 16 may be in communication with the travel server 10 over the communication network 14. The communication network 14 generally represents one or more communication networks over which the one or more travel servers 10, one or more availability servers 12, and one or more client devices 16 may communicate. For example, the communication network 14 may comprise the Internet, a local area network (LAN), a wide area network (WAN), a cellular data network, one or more high speed bus connections, and/or other such types of communication networks.

Each travel server 10 includes at least one processor 18 including at least one hardware-based microprocessor coupled to a memory 20. The memory 20 may represent the random access memory (RAM) devices comprising the main storage of travel server 10, as well as any supplemental levels of memory, e.g., cache memories, non-volatile or backup memories (e.g., programmable or flash memories), read-only memories, etc. In addition, memory 20 may be considered to include memory storage physically located elsewhere in computer 10, e.g., any cache memory in a microprocessor, as well as any storage capacity used as a virtual memory, e.g., as stored on a mass storage device or on another computer coupled to the travel server 10.

For interface with a user or operator (e.g., a travel agent, a travel services representative, etc.), the travel server 10 typically includes a user interface 22 incorporating one or more user input/output devices, e.g., a keyboard, a pointing device, a display, a printer, etc. Otherwise, user input may be received via another computer or terminal, such as the client device 16, e.g., over a network interface 24 coupled to the communication network 14, where the communication network may be the Internet. The travel server 10 also may be in communication with one or more mass storage devices, which may be, for example, internal hard disk storage devices, external hard disk storage devices, external databases, storage area network devices, etc.

Each travel server 10 typically operates under the control of an operating system 26 and executes or otherwise relies upon various computer software applications 28, components, programs, objects, modules, data structures, etc., including for example, a fare search engine 30, as will be described in greater detail below. Moreover, various applications, components, programs, objects, modules, etc. may also execute on one or more processors in another computer coupled to travel server 10 via the communication network 14, e.g., in a distributed or client-server computing environment, whereby the processing required to implement the functions of a computer program may be allocated to multiple computers over a network. For example, some of the functionality described herein as being incorporated into a travel server 10 and/or into an availability server 12 may be implemented in one or more travel servers 10 and/or one or more availability servers 12.

The memory 20 of the travel server 10 generally stores one or more databases including, for example, a fare database 32, a minimum fare path graph database 34, an additional location database 36, and a user database 38. Each of the databases 32, 34, 36, 38 contains data and supporting data structures that store and organize the data. In particular, each of the databases 32, 34, 36, 38 may be arranged with any database organization and/or structure including, but not limited to, a relational database, a hierarchical database, a network database, and/or combinations thereof. A database management system in the form of a computer software application executing as instructions on a processing unit of the travel server 10 is used to access the information or data stored in records of the databases 32, 34, 36, 38 in response to a query.

The fare database 32 generally stores data indicating a monetary value for each travel provider between two geographic locations. For example, the fare database 32 may store data indicating a value associated with one or more airlines for flights from Los Angeles, California (LAX) to Miami, Florida (MIA). The minimum fare path graph database 34 may comprise a cache of values that have been computed earlier or duplicates of original values that are stored elsewhere. The minimum fare path graph database 34 may contain fare paths existing for all possible travel requests along with a pre-calculated minimum fare amount based on the values of the fare database 32, where each fare path stored in the minimum fare path graph database 34 may be considered a candidate fare path. In addition, consistent with embodiments of the invention, the minimum fare path graph database 34 may store route/travel information for each fare path. This travel route information for each fare path is pre-aggregated based on information extracted from the fare of database 32. In general, the route information identifies one or more travel routes on which the fare path applies. For example, the minimum fare path graph may store a minimum fare path for travel between Nice, France (NCE) and Miami, Florida (MIA), and the minimum fare path graph may include one or more routes between NCE and MIA to which the minimum fare path applies.

In addition, the travel server 10 may store an additional location database 36, where the additional location database 36 may include data indicating candidate geographic locations that may be desirable to visit. Furthermore, for each stored geographic location, referred to as an additional location or a candidate additional location, the additional location database 36 may include data indicating one or more categories associated with each stored candidate additional location. The one or more categories may identify the particular reasons why the geographic location is desirable to visit. For example, if Las Vegas, Nevada (LAS) were stored as a geographic location in the additional location database 36, an associated category may indicate that Las Vegas, Nevada includes casinos as gambling attractions. Other categories may include categories corresponding to attractions that travelers typically desire to visit, including for example, whether the geographic location includes one or more beaches, museums, historic locations, fine dining, and/or other such types of attractions.

As shown, the memory 20 of the travel server 10 may also include a user database 38, where the user database may store user profile data for one or more users of the travel server 10. In such embodiments, a particular user may provide profile data to the travel server indicating categories of attractions that interest the user, types of travel preferred by the user, geographic locations preferred by the user, and/or other such information that may be utilized in generating one or more alternative travel recommendations for the user.

Each availability server 12 generally includes at least one processor 40 including at least one hardware-based microprocessor coupled to a memory 42. Each travel server 10 typically operates under the control of an operating system 44 and executes or otherwise relies upon various computer software applications 46, components, programs, objects, modules, data structures, etc., where such applications, when executed, generally cause the availability server 12 to perform one or more operations consistent with embodiments of the invention. Each availability server 12 generally builds travel solutions based on travel schedules published by travel providers and/or travel regulation entities, where such travel schedules may be maintained in one or more databases, which is illustrated as a travel database 48, and the availability server 12 may retrieve availabilities for scheduled travel from one or more travel providers and/or other availability compiling services, where such availability information is illustrated as an availability database 50. For interface with a user or operator, the availability server 12 typically includes a user interface 52 incorporating one or more user input/output devices, e.g., a keyboard, a pointing device, a display, a printer, etc. Otherwise, user input may be received via another computer or terminal, such as the travel server 10 and/or the client device 16, e.g., over a network interface 54 coupled to the communication network 14. The availability server 12 also may be in communication with one or more mass storage devices, which may be, for example, internal hard disk storage devices, external hard disk storage devices, external databases, storage area network devices, etc.

While the availability servers 12 and travel servers 10 are illustrated as separate data servers, the invention is not so limited. In some embodiments consistent with the invention, the travel server 10 may include the databases illustrated as associated with the availability server 12, and the travel server 10 may perform one or more operations described herein as associated with the availability server 12. For example, in some embodiments, the travel server 10 may include the travel database 48 and the availability database 50. In such embodiments, the travel server 10 may perform one or more operations described herein as performed by the availability server 12.

With continued reference to FIG. 1, each client device 16 generally includes at least one processor 40 including at least one hardware-based microprocessor coupled to a memory 58. Each client device 16 typically operates under the control of an operating system 60 and executes or otherwise relies upon various computer software applications 62, components, programs, objects, modules, data structures, etc., where at least one application, when executed, generally causes the client device 16 to interface with at least one travel server 10 to transmit a user's travel request to the travel server 10 and to receive one or more travel recommendations and one or more alternative travel recommendations for review by the user via the communication network 14. For interface with a user or operator, the client device typically includes a user interface 64 incorporating one or more user input/output devices, e.g., a keyboard, a pointing device, a display, a printer, etc. Otherwise, between another computer or terminal, such as the travel server 10 and/or the client device 16, e.g., over a network interface 66 coupled to the communication network 14. The client device 16 also may be in communication with one or more mass storage devices, which may be, for example, internal hard disk storage devices, external hard disk storage devices, external databases, storage area network devices, etc. The client device 16 may be a mobile telephone, a tablet, a personal digital assistant (PDA), a desktop computer, a laptop computer, a notebook computer, etc.

In general, the routines executed to implement the embodiments of the invention, whether implemented as part of an operating system or a specific application, component, program, object, module or sequence of instructions, or even a subset thereof, will be referred to herein as "computer program code," or simply "program code." Program code typically comprises one or more instructions that are resident at various times in various memory and storage devices in a computer, and that, when read and executed by one or more processors in a computer, cause that computer to perform the steps necessary to execute steps or elements embodying the various aspects of the invention. Moreover, while the invention has and hereinafter will be described in the context of fully functioning computers and computer systems, those skilled in the art will appreciate that the various embodiments of the invention are capable of being distributed as a program product in a variety of forms, and that the invention applies equally regardless of the particular type of computer readable media used to actually carry out the distribution.

Such computer readable media may include computer readable storage media and communication media. Computer readable storage media is non-transitory in nature, and may include volatile and non-volatile, and removable and non-removable media implemented in any method or technology for storage of information, such as computer-readable instructions, data structures, program modules or other data. Computer readable storage media may further include RAM, ROM, erasable programmable read-only memory (EPROM), electrically erasable programmable read-only memory (EEPROM), flash memory or other solid state memory technology, CD-ROM, digital versatile disks (DVD), or other optical storage, magnetic cassettes, magnetic tape, magnetic disk storage or other magnetic storage devices, or any other medium that can be used to store the desired information and which can be accessed by a computer. Communication media may embody computer readable instructions, data structures or other program modules. By way of example, and not limitation, communication media may include wired media such as a wired network or direct-wired connection, and wireless media such as acoustic, RF, infrared and other wireless media. Combinations of any of the above may also be included within the scope of computer readable media.

Various program code described hereinafter may be identified based upon the application within which it is implemented in a specific embodiment of the invention. However, it should be appreciated that any particular program nomenclature that follows is used merely for convenience, and thus the invention should not be limited to use solely in any specific application identified and/or implied by such nomenclature. Furthermore, given the typically endless number of manners in which computer programs may be organized into routines, procedures, methods, modules, objects, and the like, as well as the various manners in which program functionality may be allocated among various software layers that are resident within a typical computer (e.g., operating systems, libraries, API's, applications, applets, etc.), it should be appreciated that the invention is not limited to the specific organization and allocation of program functionality described herein.

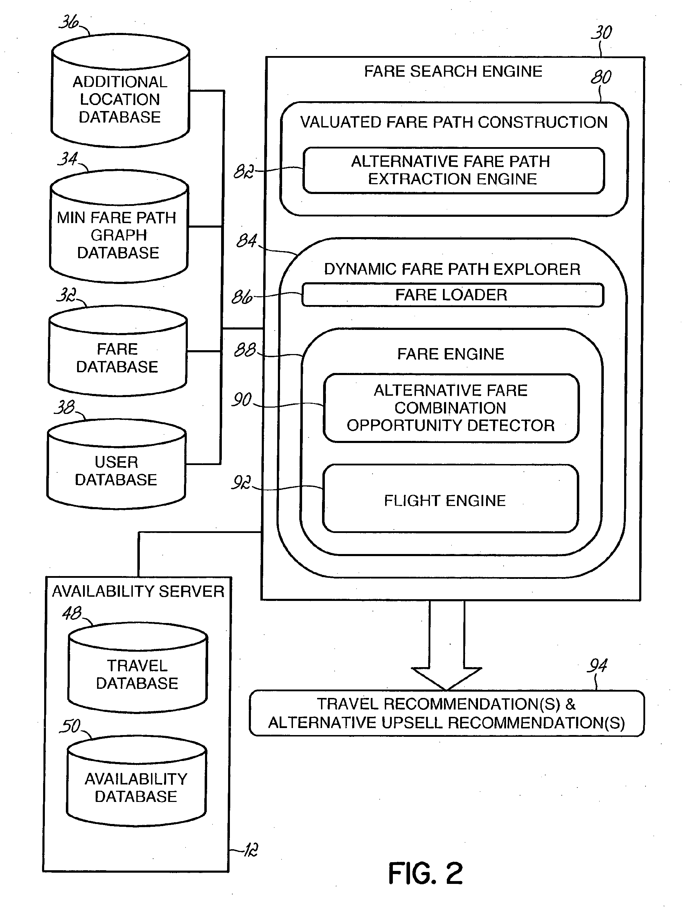

Turning now to FIG. 2, this figure provides a block diagram illustrating various functional components utilized and operations performed to generate travel recommendations and alternative travel recommendations consistent with some embodiments of the invention. As shown FIG. 2, the fare search engine 30 includes a valuated fare path construction functional component 80. The valuated fare path construction component 80 is configured to extract fare paths from the minimum fare path graph database 34 and dynamically build valuated fare paths to be explored for a given request based on the extracted fare paths. For example, if a travel request includes an origin of NCE and a destination of MIA, the valuated fare path construction component 80 may build one or more valuated fare paths to explore for flights from NCE to MIA.

In addition, the valuated fare path construction component 80 includes an alternative fare path extraction engine 82, where the alternative fare path extraction engine 82 is configured to select one or more fare paths stored in the minimum fare path graph database 34 to extract as one or more alternative fare paths. In general, the alternative fare path extraction engine 82 selects fare paths to extract by filtering the fare paths of the minimum fare path graph database 34 based at least in part on whether a particular fare path includes an additional stop in one or more routes associated with the particular fare path. As discussed previously, additional stops may be stored in an additional location database 36. Furthermore, such filtering may be based at least in part on whether a particular additional stop is associated with one or more categories.

In some embodiments, the alternative fare path extraction engine 82 may filter fare paths based on a stop criterion, where the stop criterion may be user defined and/or defined by the travel reservation service provider. For example, a user may include a budget range in a travel request entered at the client device 16, and the alternative fare path extraction engine may only extract alternative fare paths that do not exceed the budget that is received from the client device 16. With respect to a travel reservation service provider, the service provider may define a maximum amount or percentage that the values of alternative fare paths may exceed the values of the minimum value fare paths. In such embodiments, the alternative fare path extraction engine 82 may filter out fare paths of the minimum fare path graph database 34 having values exceeding the stop criterion.

Additional locations may be based on preferred locations stored in a user profile corresponding to a particular user stored in the user database 38. For example, a particular user may submit a travel request including travel from NCE to MIA, and based on the particular user's corresponding user profile stored in the user database 38 indicating that the particular user is interested in geographic locations including attractions for children, the alternative fare path extraction engine 82 may query the additional location database 36 for additional locations including attractions for children, and the alternative fare path extraction engine 82 may extract alternate fare paths stored in the minimum fare path graph database 34 including routes having an additional stop including attractions for children. Following extraction of the alternative fare paths by the alternative fare path extraction engine 82, the valuated fare path construction component 80 builds valuated alternative fare paths.

After building the valuated fare paths with the valuated fare path construction component 80, a dynamic fare path explorer functional component 84 of the fare search engine 30 searches and dynamically builds the travel recommendations and the alternative recommendations. A fare loader 86 loads the fares of the valuated fare paths along with any rules associated with the fare paths and validates the fares. Rules may be indicated by rules data associated with each fare path, where a rule may indicate fare restrictions for stopovers, transfers, minimum stay restrictions, and/or a fare range of applicability. For example, a fare of a fare path may only be valid if a traveler stays in a particular geographic location for a minimum amount of time. In such example, the minimum stay restriction may be considered by the dynamic fare path explorer component 84 in generating travel recommendations and alternative travel recommendations.

A fare engine 88 of the dynamic fare path explorer component 84 builds and validates fare combinations covering the travel request. Such fare combinations may include a fare break, where the fare break indicates a combination point between two separate fares. For example a fare between a first and second location may be combined with a fare between the second location and a third location, in this example, the second location would be a fare break. An alternative fare combination opportunity detector 90 detects stop opportunities associated to the fare combinations of the current alternative fare path. In general a stop opportunity may be indicated by the rules associated with the fare combination. For a given fare path, one or more fare combinations may be possible, including a cheapest fare combination and one or more fare combinations that are more expensive. The rules of fares of a fare combination may indicate the possibility for a stop (i.e., a stop may be authorized based on applicable fare rules for the fare combination). Therefore, detecting a stop opportunity associated with a fare combination is based at least in part on the rules of fares of the fare combination. The alternative fare combination opportunity detector 90 may analyze such fare combinations of an alternative fare path to determine whether an additional stop is possible at one or more fare break points, whether a stop-over is permitted at a point between fare break points, and/or the allowed duration of such breaks such that the fare combination is still applicable (according to any rules associated with the fare combination). As such, consistent with embodiments, the alternative fare combination opportunity detector 90 determines whether an additional stop is possible at fare break points of the one or more alternative fare combinations of each alternative fare path based on associated rules. For example, if a rule for an alternative fare combination requires that a traveler may only remain at the geographic location associated with the fare break point for less than a day, the alternative fare combination opportunity detector 90 may determine that the alternative fare combination does not present any possible opportunities. Similarly, if rules associated with an alternative fare combination allow a traveler to remain at the geographic location of a fare break point for two days, the alternative fare combination opportunity detector 90 may determine that the alternative fare combination presents opportunities for alternative travel recommendations.

Based on such analysis, the alternative fare combination opportunity detector 90 forwards detected alternative trip opportunities, as well as possible stop durations information, along with the validated fare combinations to a flight engine 92. The flight engine 92 may build flight combinations based at least in part on travel schedules provided by travel providers and/or other travel schedule maintaining entities (e.g., government travel regulation entities, third party travel schedule aggregation services, etc.). The travel schedules may be stored in the travel database 48, where the travel database 48 generally represents the one or more databases that store such travel schedule information (i.e., schedule data). The one or more databases storing the travel schedule information may be separately maintained by different travel providers and/or other travel schedule maintaining entities. The flight combinations are further based at least in part on availability data provided by travel providers and/or other travel availability maintaining entities stored in the availability database 50. While in Fig. 2, the illustrated embodiment includes a flight engine 92, embodiments of the invention are not so limited. A travel engine may be utilized, where the travel engine builds travel combinations from more than one type of travel (e.g., flights, rail travel, bus travel, and/or other such types of travel).

In some embodiments, the travel database 48 and the availability database 50 may be remotely managed by the availability server 12. In such embodiments, the travel server 10 executing the fare search engine 30 may generate a query based at least in part on the fare combinations, travel request, and/or extracted minimum fare paths/alternative fare paths. For fare combinations based on alternative fare paths, in case an additional/alternative stop is possible for such fare combinations (i.e., a stop opportunity), the data related to this stop opportunity, points, and possible stay durations are also provided the availability server 12 in the query. The query may be communicated to the availability server 12, and the availability server 12 may communicate a response including corresponding availability data that indicates valid travel combinations for the fare combinations to the travel server 10 based at least in part on the travel database 48 and/or the availability database 50. In some embodiments, when data corresponding to a stop opportunity (including data that identifies one or more possible stay durations for the stop opportunity) is provided to the availability server, the received availability data may be based at least in part on such stop opportunity data. In these embodiments, availability data may correspond only to travel combinations that match conditions corresponding to the stop opportunity. Therefore, in some embodiments, a further filtering may be performed prior to generating alternative travel recommendations by including stop opportunity data in the query to the availability server 12 such that only valid travel combinations matching the conditions of the stop opportunity are received from the availability server 12. Based at least in part on the data in the travel database 48 and/or the data in the availability database 50, the flight engine 92 generates the standard travel recommendations and alternative travel recommendations 94.

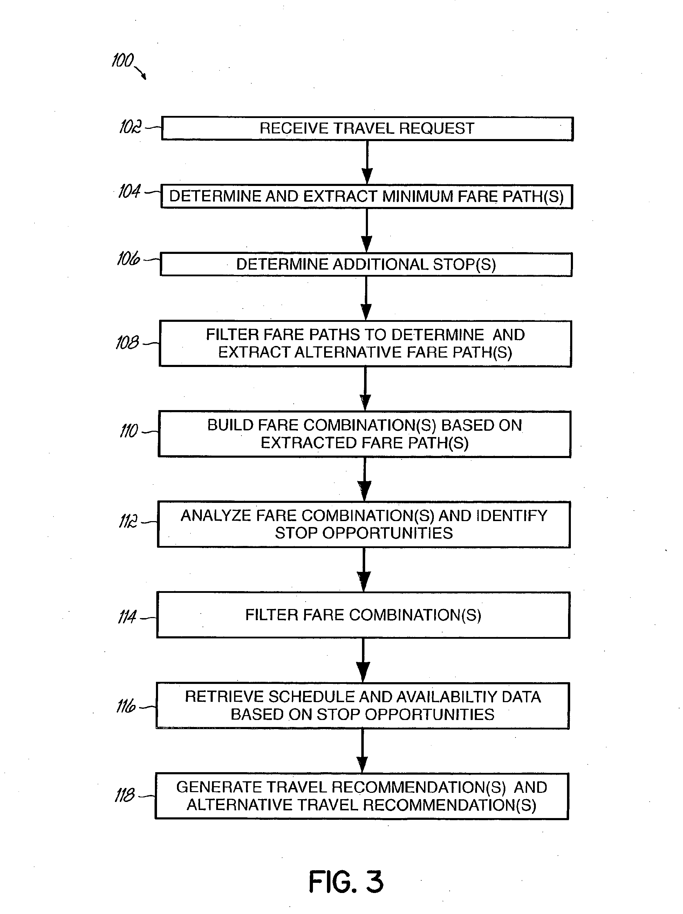

FIG. 3 provides flowchart 100 which illustrates a sequence of operations that may be performed by the travel server 10 consistent with embodiments of the invention to generate one or more travel recommendations and one or more alternative travel recommendations based on a user's travel request. The travel server 10, and more specifically the processor 18 of the travel server 10, receives a travel request from a user (block 102). Generally, the user may interface with the travel server 10 via the client device 16 to generate a travel request over the communication network 14. In some embodiments, such interface comprises a web based interface where the client device 16 may load a web based interface executing on the travel server 10 and input data using the web interface to generate a travel request. In other embodiments, the client device 16 may execute a dedicated application 62 to interface with the travel server 10 to generate a travel request, and in other embodiments, the user may interface directly with the travel server 10 using the user interface 22.

In general the generated travel request will include a geographic constraint and a time constraint. For example, the travel request may include an origin geographic location and a destination geographic location for the geographic constraint and a desired date for the travel as the time constraint. The travel server 10 determines and extracts minimum fare paths corresponding to the travel request from the minimum fare path graph database 34 (block 104).

The travel server may determine one or more additional locations (block 106). As discussed, the travel server 10 may query an additional location database 36 to determine one or more additional locations. In addition, determining an additional location may be based at least in part on the determined minimum fare paths, user provided information as indicated in the travel request and/or in a user profile stored in the user database 38 (e.g., a maximum budget, one or more preferred geographic locations of the user, one or more categories of attractions preferred by the user, etc.). Furthermore, in some embodiments, determining an additional location may be based at least in part on the geographic locations included in the geographic constraint of the travel request. For example, if a geographic location indicated as the desired destination in the travel request includes a beach, one or more additional locations may be determined based on whether such additional locations include a beach as indicated in the additional location database 36.

The travel server 10 filters fare paths of the minimum fare path graph database 34 using one or more filter parameters and extracts one or more fare paths of the minimum fare path graph meeting the filter parameters as alternative fare paths (block 108). In some embodiments of the invention, the travel server may filter the fare paths of the minimum fare path graph database 34 by identifying all fare paths having at least one associated route that includes at least one additional stop corresponding to a determined additional location, and in such embodiments, the determined additional locations serve as a filter parameter.

Furthermore, in some embodiments, the travel server may filter the fare paths of the minimum fare path graph database 34 using a stop criterion, where the stop criterion serves as a filter parameter. In such embodiments, the travel server 10 filters out fare paths having at least one associated route that includes at least one additional stop that exceeds the stop criterion. The stop criterion may be a predefined value and/or percentage above a value associated with the minimum fare paths that an alternative fare path should not exceed.

For example, if the highest value of a minimum fare path for the travel request is 1000 €, and the stop criterion is 10% over the highest value of a minimum fare path, the travel server 10 may not extract fare paths of the minimum fare path graph having a value above 1100 € as alternative fare paths. Similarly, the stop criterion may be selected to be a percentage, such as 10%, over the average value of all the minimum fare paths. In some embodiments, the user may define the stop criterion in the travel request and/or the user profile stored in the user database 38 by indicating a budget, a monetary amount over a value associated with the minimum fare paths, and/or a percentage over a value associated with the minimum fare paths that the user does not wish to exceed. In other embodiments, the travel reservation service provider and/or one or more travel providers may define the stop criterion.

As discussed above with respect to FIG. 2, following extraction of the minimum fare paths and the alternative fare paths corresponding to the travel request, the travel server 10 builds fare combinations based on the extracted minimum fare paths and also builds fare combinations based on the extracted alternative fare paths (i.e., alternative fare combinations) (block 110). The fare combinations are analyzed and stop opportunities are identified (block 112). In some embodiments, the fare combinations may be filtered based at least in part on the identified stop opportunities (block 114). For example, any alternative fare combinations that do not include an identified stop opportunity may be discarded. Schedule and availability data may be retrieved for fare combinations (block 116) (i.e., the availability server 12 may be queried), where such schedule and availability data may be based at least in part on the identified stop opportunities for any alternative fare combinations. As such, the schedule and availability data retrieved for fare combinations may be limited such that schedule and availability data retrieved for alternative fare combinations is filtered to include only schedule and availability data that matches any conditions specified in stop opportunity data corresponding to the identified stop opportunities. The travel server 10 generates travel recommendations and alternative travel recommendations (block 118) based on the fare combinations and retrieved schedule and availability data. The travel recommendations and alternative travel recommendations may be communicated to the user such that the user may review the various recommendations and select a travel recommendation or an alternative travel recommendation.

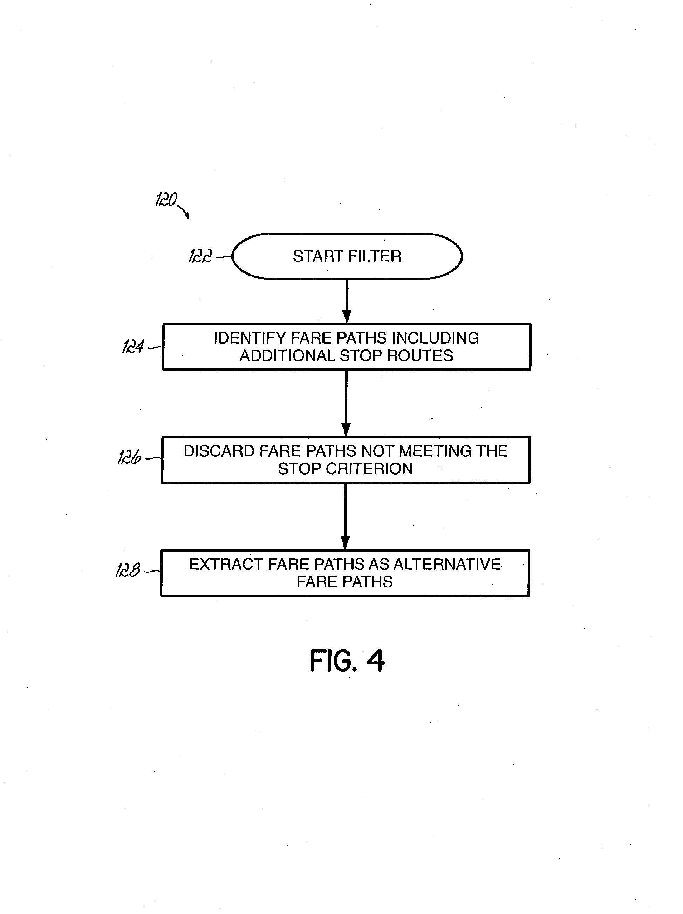

FIG. 4 provides flowchart 120, which illustrates a sequence of operations that may be performed by the travel server 10 to filter the fare paths of the minimum fare path graph database 34 and thereby determine alternative fare paths for a travel request consistent with some embodiments of the invention. After determining the minimum fare paths to extract from the minimum fare path graph database 34, the alternative fare path extraction engine 82 is initialized to filter fare paths from the minimum fare path graph database 34 for alternative fare paths (block 122). The processor 18 of the travel server 10 analyzes the fare paths of the minimum fare path graph database 34 not extracted as the minimum fare paths that meet at least a part of the geographic constraint of the travel request (i.e., include at least one geographic location of the geographic constraint), and, based upon that analysis, identifies those fare paths including at least one associated route including at least one additional stop (block 124). The processor 18 further reduces the number of fare paths by discarding fare paths that do not meet the stop criterion (block 126), and the remaining fare paths are extracted as alternative fare paths (block 128).

As described, as described above in Figs. 2 and 3, the travel server 10 may build fare combinations based at least in part on the extracted alternative fare paths. These fare combinations may be analyzed by the processor 18 executing the alternative fare opportunity detector 90 to identify fare combinations corresponding to the extracted alternative fare paths that present an opportunity for an additional stop (i.e., a stop opportunity). As such, the processor 18 filters the fare combinations to be processed based at least in part on whether such fare combinations include a stop opportunity. In general, the filtered fare combinations will present an opportunity for an alternative travel recommendation based thereon.

In general, alternative travel recommendations may be generated by building and validating all possible fare paths including a route that includes an additional stop (i.e., pricing routes stopping at an intermediate geographic location) and to test all possible stay durations for the best fares. However, to explore and price all such fare paths, as well as possible stays, for all possible intermediate geographic locations generally leads to high processing resource costs (i.e., the amount of processing time utilizing one or more processors and one or more associated hardware resources) to generate alternative travel recommendations. In turn, the response time to a user's travel request may be exponentially longer if alternative travel recommendations are also generated.

By selectively filtering fare paths from the minimum fare path graph database 34 that include at least one additional stop in at least one route that also meet a stop criterion, embodiments of the invention dynamically limit the number of alternative fare paths to be validated and built. By dynamically limiting the number of alternative fare paths to validate and build, embodiments of the invention may realize processing resource savings and efficiency gains as compared to validating and building all possible fare paths to generate alternative travel recommendations.

Moreover, by filtering the fare paths to explore based at least in part on whether such fare paths include one or more routes including an additional stop as well as filtering the fare paths based at least in part on minimum fare knowledge and a stop criterion, embodiments of the invention may return more interesting/enticing alternative travel recommendations in a shorter time as compared to attempting to generate alternative travel recommendations based on all fare paths. Filtering based on fare knowledge (i.e., the values of the minimum fare paths) with the fare search engine 30 functional architecture facilitates generating travel recommendations and alternative travel recommendations concurrently for a processing resource cost proximate to the processing resource cost associated with conventional systems that only generate conventional travel recommendations.

In addition, fare combinations based on the alternative fare paths may be filtered based at least in part on whether the fare combination includes a stop opportunity based on the rules of the fares associated with the fare combination. Therefore, limiting the number of fare combinations to validate limits the schedule and availability data needed to generate alternative travel solutions. Filtering the fare combinations to validate may realize processing resource savings and efficiency gains as compared to validating all possible fare combinations. For example, with reference to the alternative fare combination opportunity detector 90, each fare combination of each alternative fare path may be analyzed to identify fare combinations that include an identified stop opportunity. If a fare combination does not include a stop opportunity, the fare combination is discarded (i.e., not processed further/validated). If a fare combination includes a stop opportunity, this fare combination is processed by the flight engine 92. While a particular fare combination may not include a stop opportunity, discarding such fare combination generally corresponds to discarding the fare combination for alternative travel recommendations generation, and does not relate to selecting fare combinations corresponding to travel recommendations (i.e., low-priced travel recommendations).

Furthermore, the travel server may further limit processing by only querying the travel database 48 and availability database 50 for schedules and availability that matches conditions associated with the stop opportunity. For example, if rules of a fare combination that includes a stop opportunity permits a maximum of 2 days for an additional stop, the travel database 48 and availability database would be queried only for schedules and availability that matches the 2 day maximum for the additional stop.

By filtering the fare paths to explore, filtering the fare combinations to validate, and/or filtering the schedule and availability data to request (i.e., query), embodiments of the invention may realize processing resource savings and efficiency gains as compared to systems that consider all possible fare paths, all possible fare combinations, and/or all possible schedules and availability for such fare combinations. For example, with respect to flight combinations including a short stay, such flight combinations may generally be estimated at 2.5x10¹⁰ potential recommendations. By adding an additional stop in a geographic location, if the stop includes 10 additional inbound cities and 10 outbound cities and the additional stop is for 1-3 days, the total potential number of recommendations may be estimated at approximately 7.5 x 10¹², which multiplies by 300 the number of pricing operations performed by the travel server 10. Embodiments of the invention that filter the fare paths to explore, filter fare combinations to validate, and/or filter queries to the availability database for alternative travel recommendations serves to greatly reduce the additional potential recommendations as well as the processing resources dedicated thereto. Limiting such processing results in reduced pricing operations performed by the travel server 10. As discussed, embodiments of the invention may further filter fare combinations when building and validating the fare combinations based at least in part on whether an additional stop is possible at one or more fare break points to further limit the number of fare combinations to analyze to generate alternative travel recommendations. By further filtering the fare combinations when building and validating the fare combinations, embodiments of the invention reduce the fare combinations that the flight engine 92 may analyze when generating alternative travel/upsell recommendations.

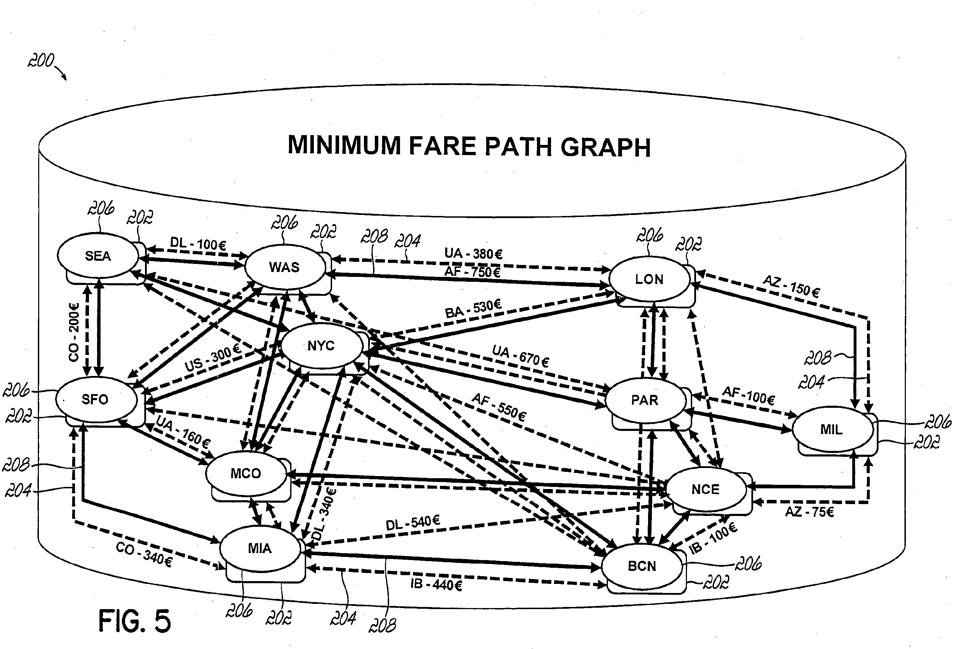

FIG. 5 provides an illustration representative of the data of a minimum fare path graph that may be stored in the minimum fare path graph database 34 and that may be analyzed by embodiments of the invention to extract minimum fare paths and alternative fare paths. As shown, the minimum fare path graph includes a plurality of fare break points 202 and a plurality of fare paths 204 therebetween. Each fare path 204 includes data indicating a minimum value associated with the fare path and data identifying one or more travel providers (e.g., airlines, rail travel companies, bus travel companies, etc.) associated with the minimum fare path. Furthermore, in embodiments of the invention, the minimum fare path graph includes a plurality of geographic locations 206 and a plurality of routes 208 therebetween. The routes 208 include data indicating one or more travel providers that provide travel services between the two geographic locations.

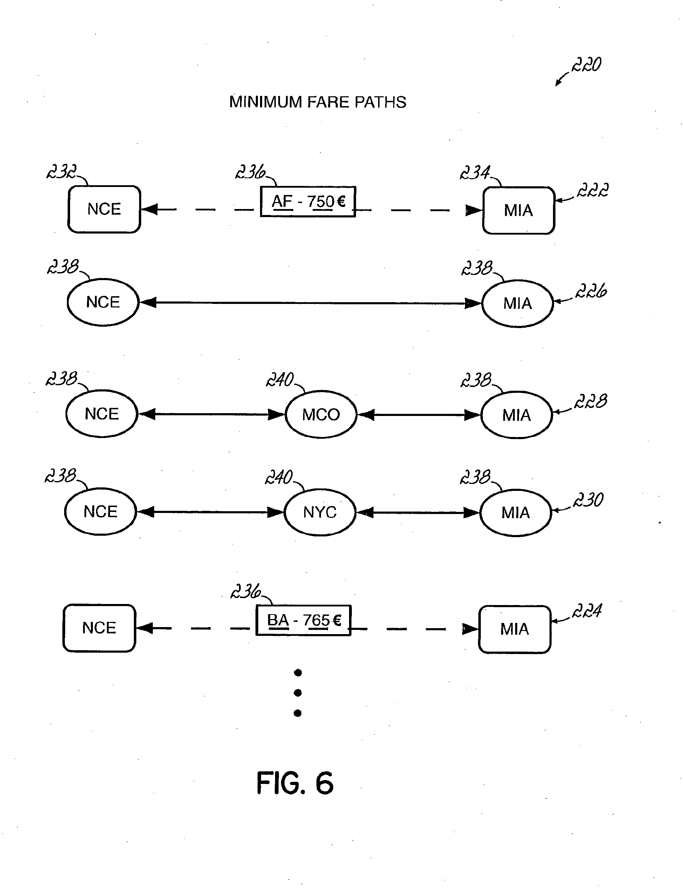

FIG. 6 provides an illustrative example 220 of minimum fare paths 222, 224 and associated routes 226, 228, 230 for travel between NCE and MIA. As shown, a first minimum fare path 222 includes two fare break points NCE 232 and MIA 234 indicating that the associated travel provider and fare 236 (in this example, the minimum fare path indicates that "AF" (i.e., AirFrance), provides travel services between NCE and MIA for a minimum of 750 €). The routes 226, 228, 230 indicate routes of AF associated with the minimum fare path. A second minimum fare path 224 may also include additional routes (not shown) of BA (i.e., British Airways).

Each of the routes 226, 228, 230 includes at least two geographic locations 238, and some routes, such as routes 228, 230, may include an intermediate geographic location 240. In embodiments of the invention, determining an alternative fare path may be based at least in part on whether an intermediate geographic location 240 of a route 226, 228, 230 corresponds to an additional location stored in the additional location database 36 and/or corresponds to an additional location preferred by a user as indicated in a corresponding user profile stored in the user database 38. In some embodiments of the invention, determining an alternative fare path may be based at least in part on whether an intermediate geographic location 240 of a route 226, 228, 230 of a fare path is associated with a desired category (e.g., casino, museum, beach, theme park, favorable exchange rate, etc.). Whether an intermediate geographic location is associated with a desired category may be indicated by data stored in the additional location database 36.

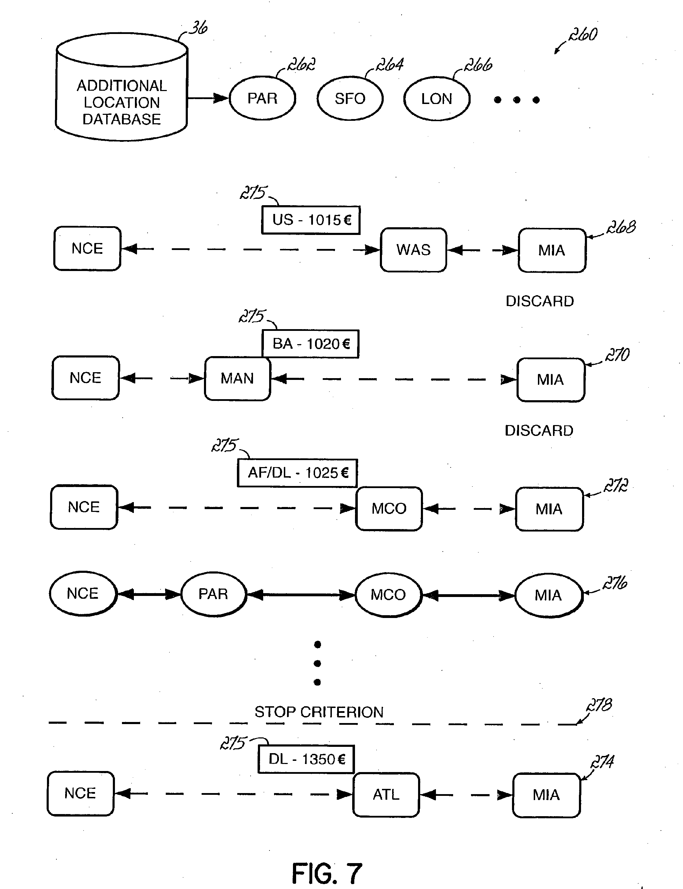

FIG. 7 provides an example 260 illustrating the filtering of fare paths to determine alternative fare paths consistent with some embodiments of the invention. In this example, the travel request includes travel from NCE to MIA. As shown, the additional location database 36 of the example indicates additional geographic locations 262, 264, 266 that may be utilized in filtering fare paths 268, 270, 272, 274 of the minimum fare path graph 200. Each fare path 268, 270, 272, 274 includes associated data 275 indicating a value and at least one travel provider. In this example, Paris, France (PAR) 262; San Francisco, California (SFO) 264; and London, United Kingdom (LON) 266 are included in the additional location database 36. As such, in this example, the alternative fare path extraction engine 82 may select fare paths for extraction as alternative fare paths based on whether an associated route includes an additional stop at PAR 262, SFO 264, and/or LON 266. In this example, the alternative fare path extraction engine 82 discards a first fare path 268 and a second fare path 270 because the first and second fare paths 268, 270 do not include at least one route including PAR 262, SFO 264, and/or LON 266. The alternative fare path extraction engine 82 selects a third fare path 272 to extract because the third fare path 272 includes a route 276 that includes PAR 262 as an intermediate geographic location and because the third fare path 272 does not exceed the stop criterion 278, where the stop criterion indicates a value that the fare of the fare path cannot exceed. A fourth fare path 274 is ignored because the fare data 275 associated with the fourth fare path exceeds the stop criterion 278.

While the description and examples described herein have discussed filtering fare paths based on a stop criterion and geographic locations included in associated routes, the invention is not so limited. For example, a user may indicate other preferences in a corresponding user profile and/or travel request that may be utilized by the travel server 10 to filter fare paths, including for example, preferred travel providers, preferred languages, areas of interest (e.g., wine, fine dining, seafood, modem art, golf, swimming architecture, etc.), etc. Moreover, in some embodiments, an alternative travel recommendation may include an alternative destination.

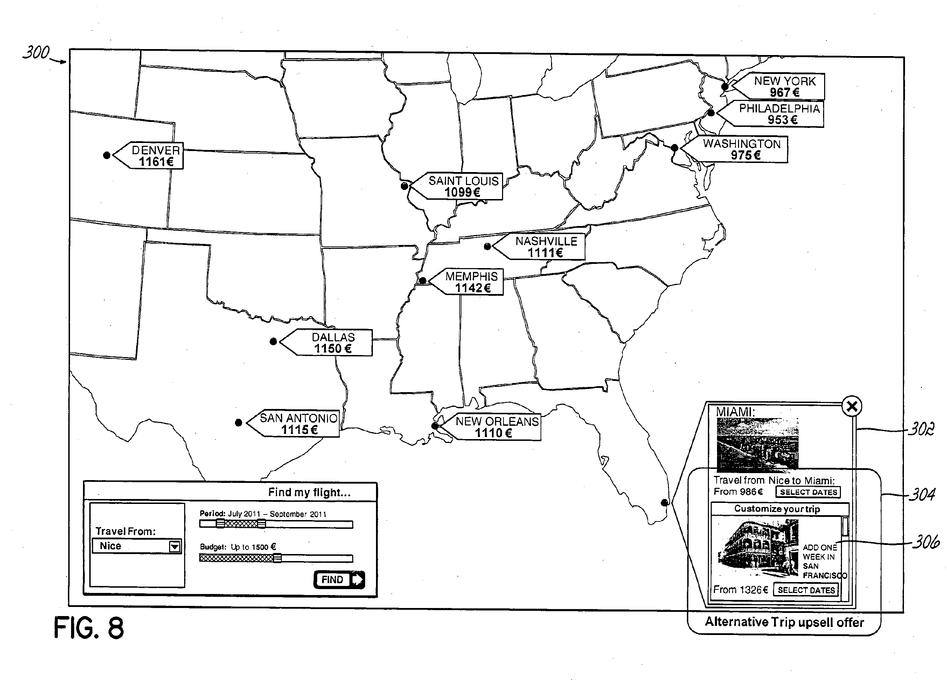

FIG. 8 provides an example output for the user interface 64 at the client device 16 consistent with some embodiments of the invention whereby the user may interface with the travel server to review and/or select a travel recommendation or an alternative travel recommendation. As shown in this example, the travel request includes air travel from NCE to MIA. In this example, the output allows the user to select a travel recommendation 302, and in addition, the output includes an alternative travel recommendation 304 offering to add a week stay in New Orleans, Louisiana, and providing the price 306 associated with the alternative travel recommendation 304.

Therefore, consistent with embodiments of the invention, travel recommendations and alternative travel recommendations may be generated responsive to a user's travel request. Embodiments of the invention selectively filter fare paths of the minimum fare path graph database based at least in part on whether such fare paths include an additional location in an associated route. The filtered fare paths may be extracted as alternative fare paths, and the alternative travel recommendations may be generated based on the alternative fare paths. Hence, embodiments of the invention dynamically limit the number of fare paths to explore to generate relevant /interesting alternative travel recommendations for the user.

The program code embodied in any of the applications described herein is capable of being individually or collectively distributed as a program product in a variety of different forms. In particular, the program code may be distributed using computer readable media, which may include computer readable storage media and communication media. Computer readable storage media, which are inherently non-transitory, may include volatile and non-volatile, and removable and non-removable tangible media implemented in any method or technology for storage of information, such as computer-readable instructions, data structures, program modules, or other data. Computer readable storage media may further include RAM, ROM, erasable programmable read-only memory (EPROM), electrically erasable programmable read-only memory (EEPROM), flash memory or other solid state memory technology, portable compact disc read-only memory (CD-ROM), or other optical storage, magnetic cassettes, magnetic tape, magnetic disk storage or other magnetic storage devices, or any other medium that can be used to store the desired information and which can be read by a computer. Communication media may embody computer readable instructions, data structures, or other program modules. By way of example, and not limitation, communication media may include wired media such as a wired network or direct-wired connection, and wireless media such as acoustic, RF, infrared, etc. Combinations of any of the above may also be considered to be encompassed as computer readable media.

Aspects of the present invention are described herein with reference to flowchart illustrations and/or block diagrams of methods, apparatus or systems, and computer program products according to embodiments of the invention. Each block of the flowchart illustrations and/or block diagrams, and combinations of blocks in the flowchart illustrations and/or block diagrams, can be implemented by computer program instructions. The computer program instructions may be provided to a processor of a general purpose computer, special purpose computer, or other programmable data processing apparatus to produce a machine, such that the instructions, which execute via the processor of the computer or other programmable data processing apparatus, implement the functions/acts specified in the block or blocks of the flowchart and/or block diagram.

These computer program instructions may also be stored in a computer readable medium that can direct a computer, other types of programmable data processing apparatus, or other devices to function in a particular manner, such that the instructions stored in the computer readable medium produce an article of manufacture including instructions that implement the function/act specified in the block or blocks of the flowchart and/or block diagram.

The computer program instructions may also be loaded onto a computer, other programmable data processing apparatus, or another device to cause a series of computations to be performed on the computer, the other processing apparatus, or the other device to produce a computer implemented process such that the executed instructions provide one or more processes for implementing the functions/acts specified in the flowchart and/or block diagram block or blocks.

The terminology used herein is for the purpose of describing particular embodiments only and is not intended to be limiting of the embodiments of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. Furthermore, to the extent that the terms "includes", "having", "has", "with", "comprised of", or variants thereof are used in either the detailed description or the claims, such terms are intended to be inclusive in a manner similar to the term "comprising."

While all of the present invention has been illustrated by a description of various embodiments and while these embodiments have been described in considerable detail, it is not the intention of the applicants to restrict or in any way limit the scope of the appended claims to such detail. Additional advantages and modifications will readily appear to those skilled in the art. The invention in its broader aspects is therefore not limited to the specific details, representative apparatus and method, and illustrative examples shown and described. Accordingly, departures may be made from such details without departing from the spirit or scope of the applicant's general inventive concept.

## Claims

1. A method of generating at least one travel recommendation and at least one alternative travel recommendation, the method comprising:
receiving a travel request including a geographical constraint and a time constraint at a travel server;
determining with a processor of the travel server at least one minimum fare path including an associated value based on the geographical constraint and the time constraint of the travel request;
generating at least one travel recommendation based on the at least one minimum fare path, each travel recommendation including an associated price;
determining at least one alternative fare path including an associated value by filtering a plurality of candidate fare paths based at least in part on the associated value of the at least one minimum fare path; and
generating at least one alternative travel recommendation based at least in part on the at least one alternative fare path, each alternative travel recommendation including an associated price.

2. The method of claim 1, wherein each alternative travel recommendation includes an additional stop not included in the at least one travel recommendation, and further comprising:
determining the additional stop based at least in part on the travel request,
wherein filtering the plurality of candidate fare paths is based at least in part on whether each candidate fare path includes at least one route comprising the additional stop.

3. The method of claim 2, wherein determining the additional stop based at least in part on the travel request comprises:
analyzing an additional location database associated with the server,
wherein the additional location database includes a plurality of candidate additional locations.

4. The method of claim 2 or claim 3, wherein determining the additional stop based at least in part on the travel request comprises:
analyzing a user profile corresponding to a user of the travel request stored in a user database associated with the travel server.

5. The method of any of the preceding claims, wherein a minimum fare path graph database stores the plurality of candidate fare paths and at least one route associated with each candidate fare path.

6. The method of claim 5, wherein determining the at least one alternative fare path including an associated value by filtering a plurality of candidate fare paths based at least in part on the associated value of the at least one minimum fare path comprises:
extracting a particular candidate fare path from the minimum fare path graph database as an alternative fare path based at least in part on whether a route of the particular candidate fare path includes an additional stop.

7. The method of any of the preceding claims, wherein determining the at least one alternative fare path by filtering the plurality of candidate fare paths based at least in part on the associated value of the at least one minimum fare path comprises:
discarding each candidate fare path having an associated value that exceeds a stop criterion,
wherein the stop criterion is based at least in part on the associated value of the at least one minimum fare path.

8. The method of claim 7, wherein determining the at least one alternative fare path by filtering the plurality of candidate fare paths based at least in part on the associated value of the at least one minimum fare path comprises:
discarding each candidate fare path having an associated value lower than the associated value of each minimum fare path,
wherein the price of each alternative travel recommendation is higher than any price associated with any travel recommendations.

9. The method of any of the preceding claims, further comprising:
building at least one fare combination for each alternative fare path of the at least one alternative fare path, wherein each fare combination includes at least one fare;
analyzing the fare combinations of each alternative fare path to identify stop opportunities in the fare combinations based at least in part on fare rules associated with the fares of the fare combinations; and
filtering the fare combinations of each alternative fare path to select each fare combination that includes an identified stop opportunity,
wherein the at least one alternative travel recommendation is based at least in part on at least one selected fare combination that includes an identified stop opportunity.

10. A travel server configured to generate at least one travel recommendation and at least one alternative travel recommendation, the travel server comprising:
a processor; and
program code configured to be executed by the processor to cause the processor to receive a travel request including a geographical constraint and a time constraint, determine at least one minimum fare path including an associated value based on the geographical constraint and the time constraint of the travel request, generate at least one travel recommendation including an associated price based on the at least one minimum fare path, determine at least one alternative fare path including an associated value by filtering a plurality of candidate fare paths based at least in part on the associated value of the at least one minimum fare path, and generate at least one alternative travel recommendation including an associated price based at least in part on the at least one alternative fare path.

11. The travel server of claim 10, wherein each alternative travel recommendation includes an additional stop not included in any travel recommendations, the program code is further configured to cause the processor to determine the additional stop based at least in part on the travel request, and the plurality of candidate fare paths are filtered based at least in part on whether each candidate fare path includes at least one route including the additional stop.

12. The travel server of claim 11, wherein the program code being configured to cause the processor to determine the additional stop based at least in part on the travel request comprises:
the program code being configured to cause the processor to analyze an additional location database associated with the travel server, the additional location database including a plurality of candidate additional locations.

13. The travel server of any of claims 10-12, wherein the program code being configured to cause the processor to determine the at least one alternative fare path by filtering the plurality of candidate fare paths based at least in part on the associated fare of the at least one minimum fare path comprises:
the program code being configured to cause the processor to extract a particular candidate fare path from a minimum fare path graph database associated with the travel server as an alternative fare path based at least in part on whether a route of the particular candidate fare path includes an additional stop, the minimum fare path graph database storing the plurality of candidate fare paths, and the minimum fare path graph database storing a value and at least one route associated with each candidate fare path.

14. The travel server of any of the preceding claims, wherein the program code is further configured to cause the processor to build at least one fare combination for each alternative fare path of the at least one alternative fare path, analyze the fare combinations of each alternative fare path to identify any stop opportunities in the fare combinations based at least in part on fare rules associated with at least one fares of each fare combination, and filter the fare combinations of each alternative fare path to select each fare combination that includes an identified stop opportunity.

15. A program product comprising:
a computer readable storage medium; and
program code stored on the computer readable storage medium and configured upon execution receive a travel request including a geographical constraint and a time constraint, determine at least one minimum fare path including an associated value based on the geographical constraint and the time constraint of the travel request, generate at least one travel recommendation including an associated price based on the at least one minimum fare path, determine at least one alternative fare path including an associated value by filtering a plurality of candidate fare paths based at least in part on the associated value of the at least one minimum fare path, and generate at least one alternative travel recommendation including an associated price based at least in part on the at least one alternative fare path.
